# EUROPÄISCHE PATENTSCHRIFT

(11) **EP 1 685 424 B1**
(45) Veröffentlichungstag und Bekanntmachung des Hinweises auf die Patenterteilung: **09.05.2007**
(21) Anmeldenummer: 04798892.8
(22) Anmeldetag: 15.11.2004
(51) Int. Cl.: G01S 7/481

(54) **EINRICHTUNG ZUR AUFNAHME EINES OBJEKTRAUMES**
SYSTEM FOR RECORDING AN OBJECT SPACE
SYSTEME DE PRISE DE VUES D'UN ESPACE OBJET

(30) Priorität: 21.11.2003 AT 18772003
(43) Veröffentlichungstag der Anmeldung: 02.08.2006
(73) Patentinhaber: Riegl Laser Measurement Systems Gmbh, 3580 Horn (AT); Ferrotron Technologies GmbH, 47441 Moers (DE)
(72) Erfinder: REICHERT, Rainer, A-3580 Horn (AT); RIEGL, Johannes, A-3754 Irnfritz (AT); STOEGER, Andreas, A-3580 Mödring (AT); LAMM, Rolf, 52076 Aachen (DE); ULLRICH, Andreas, A-3003 Gablitz (AT)
(74) Vertreter: Stocker, Kurt
(86) Internationale Anmeldenummer: PCT/IB2004/003765
(87) Internationale Veröffentlichungsnummer: WO 2005/050129

(56) Entgegenhaltungen:
- WO-A-01/77709
- US-A- 3 544 797
- US-A- 4 024 392
- US-A- 4 107 244
- US-A- 5 425 279

## Beschreibung

### Gebiet der Erfindung

Die Erfindung bezieht sich auf eine Einrichtung zur Aufnahme eines Objektraumes mit einem opto-elektronischen Entfernungsmesser nach einem Signal-Laufzeitverfahren mit einer Sendeeinrichtung zum Aussenden von optischen, insbesondere von Laser-Signalen, und einer Empfangseinrichtung zum Empfangen von optischen Signalen, insbesondere von Laserstrahlung, die von im Zielraum befindlichen Objekten reflektiert wird. Zur Erfassung und Aufzeichnung von räumlichen Strukturen werden solche Entfernungsmesser mit einer Scan-Einrichtung zur Ablenkung der optischen Achsen von Sende- und Empfangseinrichtung kombiniert, wobei die im wesentlichen parallel verlaufenden optischen Achsen, vorzugsweise in zwei orthogonale Richtungen, abgelenkt werden. Die Einrichtung umfasst ferner eine Auswerteeinrichtung, die aus der Laufzeit bzw. der Phasenlage der optischen Signale Entfernungswerte ermittelt und aus den Entfernungswerten und den gleichzeitig erfassten Winkelwerten der Scan-Einrichtung die Raumkoordinaten der einzelnen Datenelemente bildet.

### Hintergrund der Erfindung

Bekannte Einrichtungen dieser Art werden zur Vermessung von Gebäuden, Geländestrukturen, Maschinen und Anlagen etc eingesetzt. Im allgemeinen verfügen diese Systeme über einen Meßkopf, in welchem der Meßstrahl um einen begrenzten Winkel von z.B. 90° mit hoher Geschwindigkeit fächerartig abgelenkt wird. Die Ablenkung des Meßstrahles erfolgt mit Schwingspiegeln, rotierenden Spiegelrädern od. dgl. Der Meßkopf ist üblicher Weise auf einem Drehtisch montiert, der eine, vergleichsweise langsame, hin- und hergehende Bewegung ausführt. Der Schwenkwinkel liegt, je nach Anwendung, typischer Weise im Bereich von 90° bis 180°.

Diese Systeme sind dann nur mit Einschränkungen einsetzbar, wenn ein im wesentlich vollständiger Raumwinkel aufgezeichnet werden soll. Solche Einsatzfälle sind beispielsweise die Vermessung von Innenräumen von Gebäuden, die Vermessung von Kavernen, Höhlen, bei Ausbruchsarbeiten im Tunnel- oder Bergbau etc. Anwendungen unter ganz besonders erschwerten Bedingungen sind in der Stahlindustrie, in der Vermessung von Konvertern und Transportbehältern für Schmelzen von Roheisen oder Stahl gegeben.

Aus betrieblichen und energetischen-Gründen werden vielfach die schmelzflüssigen Metalle vom Herstellungs- zum Verarbeitungsort transportiert. In der Stahlindustrie werden die entsprechenden Behälter, sogenannte Torpedopfannen benutzt, um flüssiges Roheisen vom Hochofen zu den Konvertern und gegebenenfalls von diesen in Gießereien, insbesondere zu Stranggießanlagen zu bringen, wo Brammen als Ausgangsprodukt für die Walzprozesse abgegossen werden. Diese Torpedopfannen, die einige hundert Tonnen Eisen- bzw. Stahlschmelze aufnehmen können, verfügen übereine Ausmauerung, welche eine thermische Isolierung darstellt und gleichzeitig den Stahlmantel des Behälters vor der Einwirkung der Schmelze schützt. Ähnlich wie bei Stahlkonvertern unterliegen auch die Ausmauerungen solcher Torpedopfannen einem Verschleiß, im besonderen kann es zum Ausbrechen einzelner Steine der Ausmauerung kommen. Da ein solcher Schaden gravierende Auswirkungen auf die Sicherheit und Umwelt haben kann, muß die Ausmauerung dieser Transportfahrzeuge regelmäßig inspiziert, überholt oder erneuert werden, was naturgemäß große Kosten verursacht. Zu einer solchen Inspektion muß die Torpedopfanne (oder auch jedes andere Gefäß für Stahl bzw. Eisen) abgekühlt und anschließend wieder langsam auf Betriebstemperatur (~1300° C) gebracht werden. Es ergibt sich damit eine beträchtliche Betriebsunterbrechung, welche entsprechend hohe Kosten verursacht.

Eine Vorrichtung der vorstehend genannten Art ist aus dem WO0177709 bekannt.

### Kurzfassung der Erfindung

Durch die Erfindung wird nun eine Einrichtung vorgeschlagen, mit welcher eine exakte Vermessung des Innenraumes eines solchen Behälters ermöglicht wird. Durch Referenzaufnahmen bei erstmaliger Inbetriebnahme (wobei die Daten dann in einem Speicher abgespeichert werden) und durch Differenzbildung mit der jeweils aktuellen Aufnahme können die Veränderungen in der Ausmauerung, wie Verschleiß und Ausbruch von Steinen, exakt festgestellt werden. Eine Überholung der Ausmauerung wird daher nur im tatsächlichen Bedarfsfall durchgeführt.

Erfindungsgemäß weist die Erfindung einen rotierenden Meßkopf auf, der mittels einer Hohlwelle an einem Lagerbock gelagert ist. Ferner ist eine in Bezug auf den Meßkopf starr angeordnete Spiegeleinrichtung vorgesehen, durch welche axial in Bezug auf die Hohlwelle einfallende Strahlen in radiale Richtung ablenkbar sind und vice versa, wobei in axialer Richtung in Bezug auf die Hohlwelle die Strahlung einer ortsfest angeordneten Sendeeinrichtung einleitbar und durch die Spiegeleinrichtung in radialer Richtung aussendbar ist und die vom im Objektraum befindlichen Zielen reflektierte Strahlung über die Spiegeleinrichtung in Richtung der Achse der Hohlwelle umlenkbar und der ebenfalls ortsfest angeordneten Empfangseinrichtung zuführbar ist.

Zwar kann die Spiegeleinrichtung in verschiedener Weise ausgebildet werden, etwa aus einem oder mehreren Spiegeln und/oder ganz oder teilweise verspiegelten Prismen bestehen. Beispielsweise würde bei einer koaxialen Anordnung an einer gemeinsamen Optik für Sende- und Empfangskanal die Teilung dieser Kanäle z.B. durch einen teildurchlässigen Spiegel durchgeführt werden, wobei an sich ein einziger Spiegel oder ein entsprechendes Prisma genügt. In einer vorteilhaften Weiterbildung der Erfindung weist aber die Einrichtung einen rotierenden, durch einen Motor angetriebenen Meßkopf auf, der zwischen den beiden Schenkeln eines Lagerbockes angeordnet und auf einer Hohlwelle gelagert ist, wobei axial in Bezug auf die Hohlwelle im Meßkopf zwei Spiegel fixiert sind und ein erster Spiegel die axial durch die Hohlwelle eintretenden Strahlen der Sendeeinrichtung, bzw. eines gegebenenfalls zwischengeschalteten Lichtleiters, in radiale Richtung in Bezug auf die Achse der Hohlwelle umlenkt und, nach einer vorzugsweise vorgesehenen Strahlformung, aussendet, und der zweite Spiegel im wesentlichen parallel zum Sendestrahl einfallende, von Zielen im Objektraum reflektierte Strahlen, vorzugsweise nach einer Strahlumformung, in axiale Richtung in Bezug auf die Hohlwelle auf die Empfangseinrichtung, gegebenenfalls unter Zwischenschaltung eines Lichtleiters, umlenkt.

Vorteilhaft ist der Lagerbock in an sich bekannter Weise auf einem Drehteller montiert, der um eine Achse schwenkbar ist, die normal zur Drehachse des Meßkopfes verläuft und durch einen Motor antreibbar ist.

Um einen Zugang des Meßsystems zu Hohlräumen durch enge Kanäle, z.B. durchfüllstutzen von Behältern, zu ermöglichen, ist gemäß einer vorteilhaften Weiterbildung der Erfindung der Drehteller auf einem, vorzugsweise zylindrischen, Tragrohr befestigt, wobei die Schwenkachse des Drehtellers parallel zur Achse des Tragrohres ausgerichtet, vorzugsweise mit dieser ident ist.

Bei der Inspektion von Torpedopfannen oder anderen Behältern für Metallschmelzen, insbesondere bei solchen für flüssiges Roheisen oder Stahl, ist es wesentlich, daß die entsprechenden Messungen im wesentlichen bei Betriebstemperatur ausgeführt werden können, und daß es nicht erforderlich ist, den Behälter besonders abzukühlen. Vorzugsweise weist hierzu der Lagerbock und/oder das Tragrohr bzw. der Meßkopf eine Kühlung, insbesondere eine Flüssigkeitskühlung, auf bzw. ist mit einer thermischen Isolierung versehen, wobei die Zuführung und Ableitung von Kühlflüssigkeit für den Lagerbock und/oder für das Tragrohr, durch Schlauchleitungen erfolgt, die im Inneren des Tragrohres geführt sind.

Durch diese Kühlung und/oder Isolierung wird es also erstmalig möglich, Kosten für die Abkühlung von Behältern bzw. einer entsprechenden Stillstandszeit einzusparen. Daher ist bzw. sind diese Maßnahme(n) - auch unabhängig von der Ausbildung und Anordnung der Spiegeleinrichtung und der Rotation des Meßkopfes - als eigenständige Erfindung anzusehen. Dies um so mehr, als die Fachwelt bisher stets bemüht war, den Meßkopf außerhalb des zu vermessenden Behälters anzuordnen, was anderseits wiederOrientierungsmaßnahmen bezüglich des Behälters erforderte.

Vorteilhaft ist der Meßkopf zusätzlich oder alternativ mittels eines Gases (auch das Gas eines verdampfbaren Kühlmediums, wie Freon), insbesondere durch Druckluft, kühlbar, wobei beispielsweise das Gas durch die eine Seite der Hohlwelle in den Meßkopf einleitbar und durch die andere Seite aus diesem ableitbar ist und die Zuleitung des Gases durch eine Schlauchleitung im Inneren des Tragrohres erfolgt, während das Gas durch das Tragrohr abführbar ist.

Um den drehbar gelagerten Meßkopf, vor allem aber die Ein- und Austrittsfenster des Entfernungsmeßsystems, vor Verschmutzung und Beschädigung beim Einfahren der Meßeinrichtung durch den engen Kanal zu schützen, ist die äußere Kontur des in Ruhestellung befindlichen Meßkopfes, in welcher das Eintritts- und Austrittsfenster für die Meßstrahlen gegen den Drehteller gerichtet ist, der Kontur des Lagerbockes angepaßt, wobei diese zusammen beispielsweise die Form einer Kugelkalotte od. dgl. bilden.

Ein zusätzlicher Schutz des Meßsystems kann dadurch erzielt werden, daß der Lagerbock und der in Ruhestellung befindliche Meßkopf zum Tragrohr hin stufenförmig im Durchmesser abgesetzt sind, wobei an dem Tragrohr ein zweites Rohr längs verschieblich angeordnet ist und über die im Durchmesser abgesetzten Bereiche des Lagerbockes und des in Ruhestellung befindlichen Meßkopfes schiebbar ist und im vorgeschobenen Zustand den Lagerbock, den Drehteller und den Meßkopf im wesentlichen dicht abschließt.

Vorzugsweise ist das Tragrohr mit dem Lagerbock und dem Meßkopf auf einem Wagen angeordnet, der in eine definierte und reproduzierbare Position zum Meßobjekt bringbar ist.

Vorteilhaft ist die erfindungsgemäße Einrichtung zur Vermessung und Inspektion von Behältern und Kesselwagen für aggressive Flüssigkeiten, insbesondere von Metallschmelzen, eingesetzt.

Treten die Meßstrahlen im wesentlichen radial aus dem Meßkopf aus, so kommt es durch den Lagerbock bzw. den Drehteller zu einer Abschattung eines Bereiches rund um das Tragrohr od. dgl. Da das Meßsystem typischer Weise durch den Füllstutzen des Behälters in diesen eingefahren wird, bedeutet dies, daß gerade im Bereich rund um den Füllstutzen, in welchem beim Be- und/oder Entladen die Schmelze mit einer hohen Strömungsgeschwindigkeit fließt und daher dort mit den größten Verschleißerscheinungen zu rechnen ist, das Meßsystem "blind" ist. Um die erwähnte Abschattung zu vermeiden und auch diesen kritischen Bereich vermessen zu können, wird erfindungsgemäß vorgeschlagen, vor dem Ein- und Austrittsfenster der Meßstrahlen je einen Spiegel anzuordnen, der die Meßstrahlen in Bezug auf den Messkopf in eine im wesentlichen tangentiale Richtung umlenkt.

### Kurzbeschreibung der Zeichnungen

Weitere Merkmale der Erfindung ergeben sich aus der nachfolgenden Beschreibung einiger Ausführungsbeispiele und unter Bezugnahme auf die Zeichnung.
- Fig.1: zeigt schematisch eine Einrichtung zur Vermessung einer sogenannten Torpedopfanne;
- Fig. 2: veranschaulicht im Axialschnitt den erfindungsgemäßen Messkopf samt Lagerbock und Drehteller;
- Fig. 3: zeigt, ebenfalls schematisch, ein Detail eines Messkopfes im Querschnitt;
- Fig. 4a: stellt schließlich eine Messeinrichtung gemäß der Erfindung teilweise im Schnitt und teilweise in Ansicht dar, und die
- Fig. 4b: ist der zugehörige Seitenriss.

### Detaillierte Beschreibung der Zeichnung

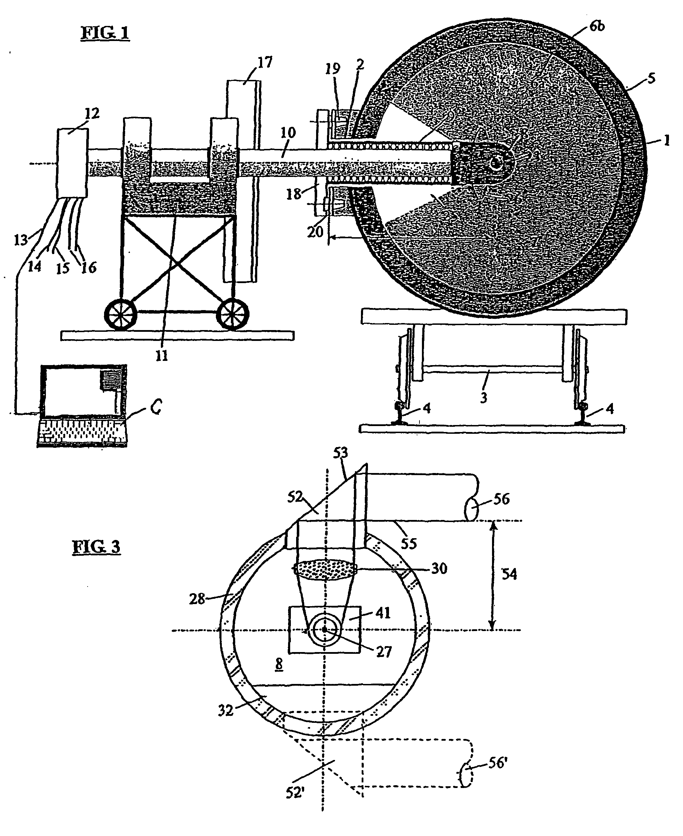

In der Fig. 1 ist eine Torpedopfanne schematisch im Querschnitt dargestellt und mit 1 bezeichnet. Eine Torpedopfanne weist normalerweise einen zylindrischen Mittelteil mit dem Füll- bzw. Entleerstutzen 2 auf. An diesen Mittelteil schließen sich beidseits konische Teile an, die in je einem Wellenstummel enden, an denen die Pfanne drehbar gelagert ist. Die beiden Lager stützen sich auf je einem Drehgestell ab, die auf einer Gleisanlage verfahrbar sind. Die Achse 3 eines solchen Drehgestells und die Gleise 4 sind schematisch angedeutet. Die Torpedopfanne 1 hat einen Stahlmantel 5. Der Innenraum weist eine Ausmauerung 6 auf, die üblicherweise aus zwei Schichten besteht, einer inneren Verschleißschicht 6a und einer äußeren Sicherheitsausmauerung 6b. Einer der konischen Bereiche der Pfanne ist mit 7 bezeichnet. Zum Füllen der Torpedopfanne 1 wird diese ausgehend von der in Fig. 1 gezeigten Position um 90° im Uhrzeigersinn verschwenkt, so dass der Füllstutzen 2 nach oben weist, zum Entleeren wird die Pfanne um 180° gedreht. Die in Fig. 1 gezeigte Zwischenstellung wird nach der Entleerung zur Inspektion der Ausmauerung angefahren.

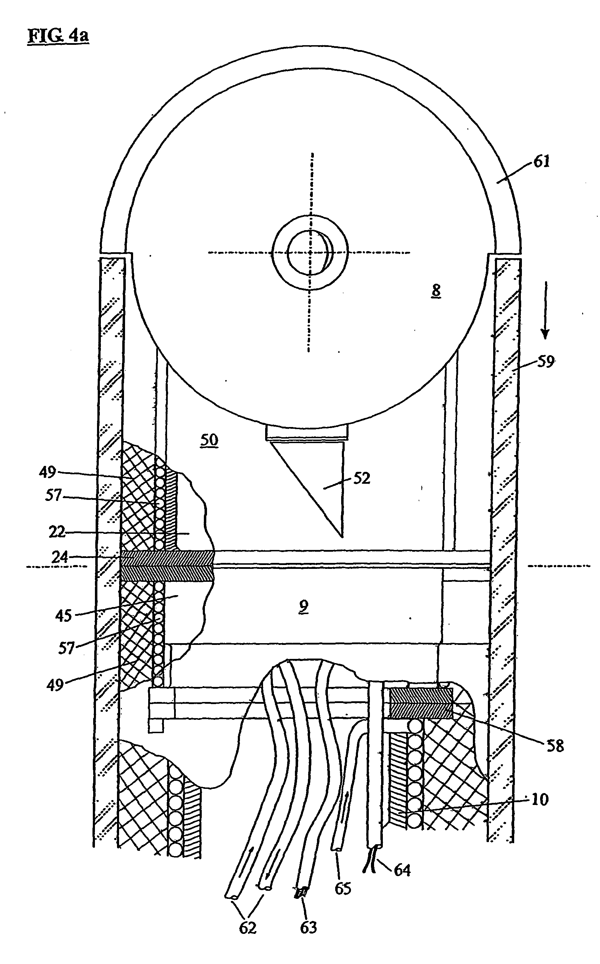

Zur Inspektion der Torpedopfanne 1 wird ein Meßkopf 8 durch den Einfüllstutzen 2 in die leere Pfanne eingeschoben. Der Meßkopf 8 ist an einem flüssigkeitsgekühltem Rohr 9 angeordnet, dessen Verlängerung 10 in einem Wagen 11 verschiebbar gelagert ist. Am freien Ende des Rohres 10 ist ein Gehäuse angeordnet, das die Elektronik eines Laserentfernungsmessers und die Steuerung der Scan-Enrichtung des Meßkopfes 8 enthält. Im Inneren des Rohres 9, 10 sind die Daten-, Steuer- und Energiekabel zum Meßkopf 8 geführt. Der Lasertransmitter bzw. Sender S, der opto-elektronische Empfänger E für die Laser-Echo-Impulse und die damit verknüpfte gesamte Auswerteeinrichtung sind im Gehäuse 12 angeordnet und sind mit dem Meßkopf 8 durch Glasfaserkabel 64 (Fig. 4a) verbunden. Dementsprechend kann unter dem Bezugszeichen 12 die Auswerteeinrichtung selbst verstanden werden

Ebenfalls im Inneren des Rohres 9, 10 geführt sind die Leitungen für das Kühlmedium und/oder eine Druckluftleitung für die Kühlung des eigentlichen Meßkopfes 8. Gesteuert wird die gesamte Anlage durch ein Steuer- und Datenkabel 13, das mit einem elektronischen Rechner C verbunden ist, der on-line oder off-line aus den durch die Auswerteeinrichtung 12 ermittelten Meßwerten in an sich bekannter Weise ein 3-D-Modell des Inneren des Behälters 1 berechnet und zweckmäßig in seinem zugehörigen Speicher auch speichert. Mit 14 ist ein Energiekabel bezeichnet, mit 15 ist eine Druckluftleitung und mit 16 die Zu- und Ableitung für das Kühlmedium. Um das Einführen des Gerätes in den Füllstutzen 2 der Torpedopfanne zu erleichtern, ist ein Strahlungschutzschild 17 vorgesehen, der am Rohr 10 befestigt ist. Am Rohr 10 ist ferner eine Platte 18 befestigt, die Paßstifte 19 aufweist, welche in entsprechende Bohrungen in der Deckfläche 20 des Einfüllstutzens 2 eingreifen und damit den Meßkopf 8 gegenüber der Torpedopfanne 1 ausrichten.

Es kann zweckmäßig sein, die Meßanlage bestehend aus Meßkopf 8, Rohr 9, 10, Gehäuse 12 und Platte 18 sowie Schutzschild 17 an einem Kran zu befestigen, wobei die Aufhängung im Schwerpunkt der genannten Anlage erfolgt. Mit einer solchen Variante kann die Meßanlage auch dann schnell und optimal an der Torpedopfanne 1 ausgerichtet werden, wenn die Meßstellung derselben nur grob eingestellt wird.

Eine exakte Orientierung des Meßsystems an der Pfanne 1 ist insofern besonders wichtig, als nur dann ein Vergleich bzw. eine Differenzbildung einer aktuellen Aufnahme mit einer älteren Aufnahme erfolgen kann. An Stelle einer mechanischen Orientierung ist es auch möglich, durch eine Vermessung von Referenzpunkten das System an der Torpedopfanne entsprechend auszurichten.

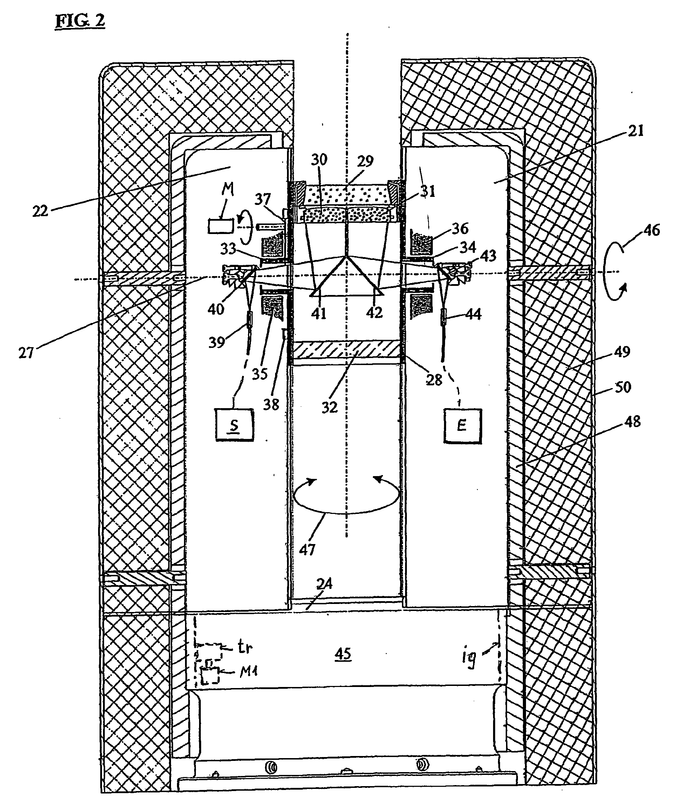

Bei der Messung rotiert der Meßkopf 8 zwischen den beiden Schenkeln 21 und 22 des Lagerbockes in Richtung des Pfeils 23. Man erkennt aus Fig. 1, dass ein kegeliger Bereich 25 rund um das Rohr 9 abgeschattet wird, da der Meßstrahl den Fußteil 24 (Fig. 2) der Messeinrichtung (an dem auch die Schenkel 21 und 22 angeordnet sind; vgl. Fig. 2, 4a) trifft und die Ausmauerung rund um den Füllstutzen 2 nicht erreichen kann. Durch eine Drehung des Meßkopfes 8 in Richtung des Pfeils 26 wird, abgesehen vom Bereich 25, der komplette Innenraum der Torpedopfanne 1 aufgezeichnet. Zu jedem einzelnen

Datenelement ergeben sich die Raumkoordinaten aus Entfernungswerten und den gleichzeitig erfassten Winkelwerten der Strahlablenkung der Scan-Einrichtung. Aus der Gesamtheit aller Datenelemente kann ein 3D-Modell des Innenraumes der Pfanne 1 erstellt werden. Existiert von derselben Torpedopfanne 1 eine ältere Aufnahme, so kann durch Differenzbildung die Veränderung der Oberfläche der Ausmauerung berechnet werden. Diese ältere Aufnahme wird in einem Speicher, etwa des Computers C, enthalten sein und kann entweder unmittelbar mit den eintreffenden Meßdaten vom Meßkopf 8 oder nach Zwischenspeicherung im Speicher des Computers C verglichen werden.

In Fig. 2 ist der Aufbau der Meßeinrichtung in einem Axialschnitt gezeigt. Der Meßkopf 8 weist ein in Bezug auf die Achse 27 ein zylindrisches Gehäuse 28 auf. In dem Zylindermantel ist ein im wesentlichen rechteckiges Fenster 29 für den Sende- und den Empfangs-Meßstrahl angeordnet. Im Gehäuse 28, hinter dem Fenster 29 befinden sich zwei Linsen 30,31 für die Meßstrahlen (Kollimationslinse für den Sendestrahl und Fokussierlinse für das reflektierte Echosignal). Das Gewicht dieser Glaselemente 29 bis 31 wird durch ein im Gehäuse 28 angeordnetes Gegengewicht 32 kompensiert. Das Gehäuse 28 ist um die Achse 27 drehbar. Gelagert ist der Meßkopf 8 an den Stummeln 33, 34 einer Hohlwelle. Die beiden Wellenstummel 33, 34 sind in schematisch angedeuteten Lagern 35, 36 gelagert und geführt. Angetrieben wird der Meßkopf 8 durch einen Motor M, dessen Ritzel 37 mit einem Innenzahnkranz 38 kämmt, der koaxial zur Hohlwelle an der Wandung des Gehäuses 28 befestigt ist. Alternativ wäre es denkbar, den Meßkopf 8 über ein nach aussen geführtes Getriebe gegebenenfalls auch von Hand anzutreiben.

Bei der Messung läuft der Meßkopf 8 mit relativ hoher Drehzahl in Richtung des Pfeiles 46 um. Die Sendestrahlung wird dem Meßkopf 8 durch ein Glasfaserkabel 39 zugeführt. Die Strahlung wird durch einen Spiegel 40 und durch die Hohlwelle axial in den Meßkopf gelenkt und dort durch eine verspiegelte Prismenfläche 41 der Kollimationslinse 30 zugeführt. Die von den Zielobjekten reflektierte Strahlung fällt durch das Fenster 29 in den Meßkopf 8 ein und wird durch die Fokussierlinse 31 nach zweifacher Umlenkung an der verspiegelten Prismenfläche 42 und an dem Spiegel 43 auf das Glasfaserkabel 44 konzentriert, welches die Echo-Signale zu der Empfangseinrichtung des Entfernungsmessers weiterleitet.

Der Lagerbock 21, 22, 24 mit seinen beiden Schenkel 21 und 22 ist auf einem Drehteller 45 angeordnet. Der Drehteller 45 führt eine hin- und hergehende Bewegung in Richtung der Pfeile 47 aus. Bei der Abtastung eines vollständigen Raumwinkels ist dieser Winkel mindestens 180°, bevorzugt 360°. Dazu ist er in seinem Inneren über eine strichliert gezeigte Zahnwalze *tr* von einem Motor M1 angetrieben. Die Zahnwalze *tr* steht im Eingriff mit einer strich-punktiert gezeigten Innenverzahnung *ig*.

Die beiden Schenkel 21 und 22 des Lagerbockes 21, 22, 24 sowie der Drehteller 45 sind von einem schematisch angedeuteten Flüssigkeitskühler 48 und/oder einer Isolierschicht 49 umgeben, die ihrerseits durch einen Blechmantel 50 umgeben ist. Als Kühlmedium kann Wasser oder auch Öl eingesetzt werden. Bei extremer Temperaturbelastung kann der Messkopf 8 zusätzlich mit einer Gas- (z.B. auch ein verdampfbares Gas, wie Freon) oder Druckluftkühlung ausgerüstet sein, die aber bei geringer Temperaturbelastung auch alleine angewendet werden kann. Zu diesem Zweck wird im Falle des vorliegenden Ausführungsbeispieles in den einen Schenkel 22 des Lagerbockes 21, 22, 24 eine nicht dargestellte Druckluftleitung geführt, die in nicht dargestellter Weise an den Hohlwellenstummel 33 angeschlossen wird. Die Druckluft (oder ein anderes Gas) durchströmt mit relativ hoher Geschwindigkeit den Messkopf 8 und tritt durch den Hohlwellenstummel 34 aus dem Meßkopf 8 aus und wird durch den Schenkel 21 des Lagerbockes 21, 22 abgeführt. Um eine optimale Kühlwirkung durch die Luft bzw. das Gas zu erreichen, können im Inneren des Meßkopfes Leitbleche angeordnet sein.

Treten, wie in dem obigen Beispiel gezeigt, die Meßstrahlen radial aus dem Meßkopf aus bzw. in diesen ein, so ergibt sich ein relativ großer Raumwinkel 25, der abgeschattet ist, den also die Meßstrahlen nicht erreichen, da sie durch die Basis 24 des Lagerbockes 21, 22, 24 bzw. den Drehteller 45 abgeschirmt werden.

In der Fig. 3 ist schematisch eine Lösung gezeigt, durch welche dieser Abschattungseffekt vermindert oder bei entsprechender Auslegung des Meßkopfes überhaupt vermieden werden kann. Erfindungsgemäß ist anstelle des Fensters 29 ein Prisma 52 vorgesehen, dessen Fläche 53 verspiegelt ist. Die Meßstrahlen treten in dieser Variante des Meßkopfes 8 nicht radial, sondern im wesentlichen tangential aus bzw. ein. Ist das Prisma 52 so ausgelegt, dass der Abstand 54 der inneren Begrenzung 55 des Meßstrahlenbündels 56 mindestens dem Radius der Basis 24 des Lagerbockes 21, 22, 24 bzw. des Drehtellers 45 entspricht, so tritt kein Abschattungseffekt auf. Wenn der Drehteller 45 den Lagerbock 21, 22, 24 mit dem Meßkopf 8 um 180° verschwenkt, nimmt das Prisma 52 und das Meßstrahlenbündel 56 die strichliert angedeutete Positionen ein (52' bzw. 56'). Mit einer auf diese Weise modifizierten Meßeinrichtung kann auch die extrem hooh beanspruchte Zone rund um die Einfüll- bzw. die Auslauföffnung 2 inspiziert werden.

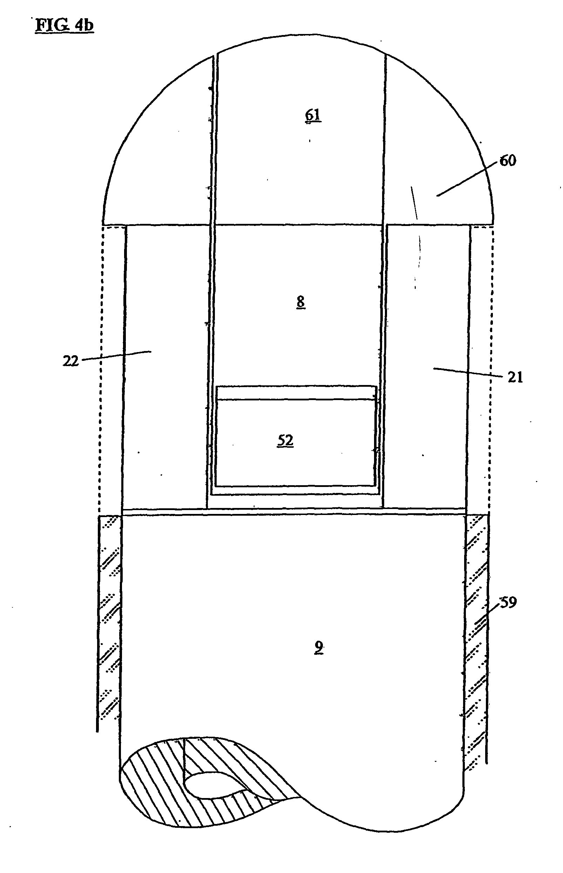

Die erfindungsgemäßen Meßeinrichtung wird beim Einsatz in Stahlwerken, insbesondere bei der vermessung der Ausmauerung von Torpedopfannen, in mehrfacher Hinsicht extrem belastet. Zunächst ist es die hohe Betriebstemperatur von etwa 1300° C, die spezielle Maßnahmen erfordert. Beim Einführen des Meßsystems in die Pfanne kann es zu einer Kollision mit der Innenwandung des Füllstutzen 2 kommen, durch welche sich Stahl-, Schlacken- oder Ausmauerungspartikel von der Wand lösen können und das Fenster 29 bzw. das Prisma 52 verschmutzen und/oder die ganze Meßeinrichtung beschädigen. In den Fig. 4a und 4b ist schematisch und teilweise im Schnitt eine Meßeinrichtung gezeigt, durch welche diese während der kritischen Phase des Einfahrens in das Innere der Torpedopfanne 1 gegenüber den genannten Risken weitgehend geschützt ist. Die Schenkel 21 und 22 sind von je einem Kühlmantel von mäanderförmig geformten Kupferröhrchen 57 umgeben. Der Kühlmantel wird durch eine Isolierschicht 49 umschlossen, der seinerseits durch einen Blechmantel 50 umgeben ist. Der Lagerbock 21, 22, 24 ist auf dem Drehteller 45 montiert, der in analoger Weise durch Kupferröhrchen 57 gekühlt und von einer Isolierschicht 49 umgeben ist. Der Drehteller 45 ist auf einem Flansch 58 des Rohres 10 befestigt, welches ebenfalls mit einer Flüssigkeitskühlung und einer Isolierschicht versehen ist. Das gekühlte und isolierte Rohr samt dem Drehteller 45 ist von einem dünnwandigen Blechrohr 9 umhüllt.

Über dem Rohr 9 und dem Lagerbock 21, 22, 24 ist ein Rohr 59 verschiebbar angeordnet. In der Ruhestellung des Messsystems nimmt dieses Rohr 59 die in Fig. 4a gezeigte Position ein, in der Arbeitsstellung ist das Rohr 59 zumindest bis zum Drehteller 45 zurückgezogen (vgl. Fig. 4b). Durch die Steuerung des Meßkopfes 8 wird dieser bei Abschaltung des Systems in die in den Fig. 4a und 4b gezeigte Position gefahren. Das Rohr 59 und der Antrieb des Messkopfes 8 sind elektrisch gegeneinander verriegelt, so daß der Meßkopfantrieb nur bei zurückgezogenem Rohr 59 eingeschaltet werden kann. Alternativ wird dann ein Signal von einem mit dem Rohr 59 zusammenarbeitenden Positionssensor abgegeben, wenn der Meßkopfantrieb zwar vom Benützer eingeschaltet wird, aber das Rohr nicht zurückgezogen ist. In einem solchen Fall wird das Signal des Sensors dann entweder einer Anzeige zugeleitet, die den Benützer an das Zurückziehen des Rohres 59 erinnert, oder es wird das Rohr mittels eines automatisch über das Signal des Sensors angesteuerten Servomotor verstellt, bis dieses in die zurückgezogene Lage gelangt.

Wie sich insbesondere aus Fig. 4b ergibt, sind die beiden Schenkel 21 und 22 des Lagerbockes 21, 22, 24 in der Ebene 60 vorteilhaft stufenförmig abgesetzt. Das freie Ende der Schenkel 21 und 22 sowie die obere Hälfte 61 des Gehäuses des Meßkopfes 8 sind als Halbkugel ausgebildet. Zum Einfahren des Meßsystems in die Torpedopfanne 1 befindet sich der Meßkopf 8 in der in den Fig. 4a und 4b gezeigten Position, das Rohr 59 ist gemäß Fig. 4a nach vorne geschoben, so daß der empfindliche Meßkopf 8 weitgehend geschützt ist. Durch die kugelige Gestaltung des freien Endes der Meßanordnung wird das Einbringen in den Behälter auch bei relativ engen Öffnungen wesentlich erleichtert. Das freie Ende der Anordnung kann auch in der Art eines Ellipsoides ausgebildet sein.

Sämtliche Leitungen zum Meßkopf, zum Drehteller 45 und zu den Kühlern werden in dem gekühlten Rohr 9 geführt. Die Zu- und Rücklaufleitungen für das Kühlmedium für den Lagerbock 21, 22, 24 und den Drehteller 45 sind mit 62 bezeichnet, die Steuer-, Energie und Datenleitungen zum Meßkopf 8 und Drehteller 45 mit 63, die Glasfaserkabel zum und vom Meßkopf mit 64. Position 65 bezeichnet die Zuleitung für das Kühlmedium zu der Kühleinrichtung für das Rohr 9 bzw. 10.

## Patentansprüche

1. Einrichtung zur Aufnahme eines Objektraumes mit einem opto-elektronischen Entfernungsmesser nach einem Signal-Laufzeitverfahren mit einer Sendeeinrichtung (S) zum Aussenden von optischen, insbesondere von Laser-Signalen, und einer Empfangseinrichtung (E) zum Empfangen von optischen Signalen, insbesondere von Laserstrahlung, die von im Zielraum befindlichen Objekten reflektiert werden, ferner mit einer Scan-Einrichtung zur Ablenkung der optischen Achsen von Sende- und Empfangseinrichtung (S bzw. E), in vorzugsweise zwei orthogonale Richtungen, wobei die optischen Achsen von Sende- und Empfangseinrichtung (S bzw. E) im wesentlichen parallel verlaufen, ferner mit einer Auswerteeinrichtung, die aus der Laufzeit bzw. der Phasenlage des ausgesandten optischen Signals Entfernungswerte ermittelt, wobei sich die Raumkoordinaten der einzelnen Datenelemente aus den Entfernungswerten und der Strahlablenkung der Scan-Einrichtung ergeben, **gekennzeichnet durch** einen rotierenden Meßkopf (8), der mittels einer Hohlwelle (33, 34) eines Lagerbock (21, 22, 24) gelagert ist, und einer in Bezug auf den Meßkopf (8) starr angeordneten Spiegeleinrichtung (41, 42), **durch** welche axial in Bezug auf die Hohlwelle (33, 34) einfallende Strahlen in radiale Richtung ablenkbar sind und vice versa, wobei in axialer Richtung in Bezug auf die Hohlwelle (33, 34) die Strahlung der ortsfest angeordneten Sendeeinrichtung (S) einleitbar und **durch** die Spiegeleinrichtung (41, 42) in radialer Richtung aussendbar ist, und die von Zielen im Objektraum reflektierte Strahlung über die Spiegeleinrichtung (41, 42) in Richtung der Achse der Hohlwelle (33, 34) umlenkbar und der ebenfalls ortsfest angeordneten Empfangseinrichtung (44) zuführbar ist.

2. Einrichtung zur Aufnahme eines Objektraumes nach Anspruch 1, **gekennzeichnet durch** einen rotierenden, **durch** einen Motor (M) angetriebenen Meßkopf (8), der zwischen den beiden Schenkeln (21 bzw. 22) des Lagerbockes (21, 22, 24) angeordnet und auf einer Hohlwelle (33, 34) gelagert ist, wobei axial in Bezug auf die Hohlwelle (33, 34) im Meßkopf (8) zwei Spiegel (41, 42) fixiert sind und ein erster Spiegel (41) die axial **durch** die Hohlwelle (33, 34) eintretenden Strahlen der Sendeeinrichtung (S), bzw. eines gegebenenfalls zwischengeschalteten Lichtleiters (39), in radiale Richtung in Bezug auf die Achse der Hohlwelle (33, 34) umlenkt und, nach einer vorzugsweise vorgesehenen Strahlformung, aussendet, und der zweite Spiegel (42) im wesentlichen parallel zum Sendestrahl einfallende, von Zielen im Objektraum reflektierte Strahlen, vorzugsweise nach einer Strahlumformung, in axiale Richtung in Bezug auf die Hohlwelle (33, 34) auf die Empfangseinrichtung (E), gegebenenfalls unter Zwischenschaltung eines Lichtleiters (44), umlenkt.

3. Einrichtung zur Aufnahme eines Objektraumes nach Anspruch 1 oder 2, **dadurch gekennzeichnet, daß** der Lagerbock (21, 22, 24) auf einem Drehteller (45) montiert ist, der um eine Achse schwenkbar ist, die normal zur Drehachse (27) des Meßkopfes (8) verläuft und durch einen Motor antreibbar ist,
und dass bevorzugt der Drehteller (45) auf einem, vorzugsweise zylindrischen, Tragrohr (10) befestigt ist, wobei die Schwenkachse des Drehtellers (45) parallel zur Achse des Tragrohres (10) ausgerichtet, vorzugsweise mit dieser ident ist, wobei
vorzugsweise wenigstens eines der folgenden Merkmale vorgesehen ist:
(a) die äußere Kontur (61) des in Ruhestellung befindlichen Messkopfes (8), in welcher das Eintritts- und Austrittsfenster (29, 52) für die Messstrahlen gegen den Drehteller (45) gerichtet ist, ist der Kontur des Lagerbockes (21, 22, 24) angepaßt, und diese zusammen bilden beispielsweise die Form einer Kugelkalotte od. dgl. (Fig. 4a und 4b);
(b) der Lagerbock (21, 22, 24) und der in Ruhestellung befindliche Meßkopf (8) sind zum Tragrohr (10) hin stufenförmig im Durchmesser abgesetzt, wobei an dem Tragrohr (9 bzw. 10) ein zweites Rohr (59) längs verschieblich angeordnet ist und über die im Durchmesser abgesetzten Bereiche des Lagerbockes (21, 22, 24) und des in Ruhestellung befindlichen Meßkopfes (8) schiebbar ist und im vorgeschobenen Zustand den Lagerbock (21, 22), den Drehteller (45) und den Meßkopf (8) im wesentlichen dicht abschließt (Fig. 4a und 4b);
(c) das Tragrohr (10) ist mit dem Lagerbock (21, 22, 24) und dem Meßkopf (8) auf einem Wagen (11) angeordnet, der in eine definierte und reproduzierbare Position zum Meßobjekt (1) bringbar ist.

4. Einrichtung zur Aufnahme eines Objektraumes, nach einem der vorhergehenden Ansprüche, **dadurch gekennzeichnet, daß** der Lagerbock (21, 22, 24) und/oder das Tragrohr (10) eine Kühlung, insbesondere eine Flüssigkeitskühlung (48, 57), aufweist und/oder mit einer thermischen Isolierung (49) versehen ist, wobei im Falle der Flüssigkeitskühlung die Zuführung und Ableitung von Kühlflüssigkeit für den Lagerbock, und gegebenenfalls auch für das Tragrohr (10), durch Schlauchleitungen (62) erfolgt, die im Inneren des Tragrohres (10) geführt sind.

5. Einrichtung zur Aufnahme eines Objektraumes, nach einem der vorhergehenden Ansprüche, **dadurch gekennzeichnet, daß** der Meßkopf (8) durch Druckluft, kühlbar ist, wobei die Druckluft durch die eine Seite (33) der Hohlwelle (33, 34) in den Meßkopf (8) einleitbar und durch die andere Seite (34) aus diesem ableitbar ist, wobei die Zuleitung der Druckluft durch eine Schlauchleitung im Inneren des Tragrohres (10) erfolgt, während die Kühlluft direkt durch das Tragrohr (10) abführbar ist.

6. Einrichtung zur Aufnahme eines Objektraumes, nach einem der vorhergehenden Ansprüche, **dadurch gekennzeichnet, daß** sie zur Vermessung und Inspektion von Behältern und Kesselwagen (1) für aggressive Flüssigkeiten, insbesondere von Metallschmelzen, eingesetzt ist.

7. Einrichtung zur Aufnahme eines Objektraumes, nach einem der vorhergehenden Ansprüche, **dadurch gekennzeichnet, daß** vor dem Ein- und Austrittsfenster der Meßstrahlen je ein Spiegel (53) angeordnet ist, der die Meßstrahlen in Bezug auf den Meßkopf (8) in eine im wesentlichen tangentiale Richtung umlenkt (Fig.3).

## Claims

1. System for recording an object space with an optoelectronic distance measuring device according to a signal running time method with a transmitting device (S) for transmitting optical signals, particularly laser signals, and a receiving device (E) for receiving optical signals, particularly laser radiation, which is reflected from objects located in the target space, also with a scanning device for deflecting the optical axes of the transmitting and receiving device (S or E), preferably in two orthogonal directions, in which the optical axes of the transmitting and receiving device (S or E) run essentially parallel, also with an evaluation device, which provides distance values from the running time or phase position of the optical signal emitted, in which the space coordinates for the individual data elements are provided by the distance values and the deflection of the beam from the scanning device, **characterised by** a rotating measuring head (8), which is supported by means of a hollow shaft (33, 34) of a bearing block (21, 22, 24), and a mirror device (41, 42), which is fixedly arranged with reference to the measuring head (8), through which beams, which are axially incident with reference to the hollow shaft (33, 34), can be deflected in a radial direction and vice versa, in which radiation from the transmitting device (S), which is fixedly arranged, can be induced in an axial direction with reference to the hollow shaft (33, 34) and can be transmitted in a radial direction through the mirror device (41, 42) and the radiation reflected from targets in the object space can be deflected through the mirror device (41, 42) in the direction of the axis of the hollow shaft (33, 34) and can be supplied to the receiving device (44), which is also fixedly arranged.

2. System for recording an object space according to claim 1, **characterised by** a rotating measuring head (8) driven by a motor (M), which is arranged between both sides (21 or 22) of the bearing block (21, 22, 24) supported on a hollow shaft (33, 34), in which two mirrors (42, 42) are fixed in the measuring head (8) axially with reference to the hollow shaft (33, 34) and a first mirror (41) deflects the beams from the transmitting device (S) or a light guide (39) interposed if necessary, which enter the hollow shaft (33, 34) axially, in a radial direction with reference to the axis of the hollow shaft (33, 34) and transmits them, preferably after the beams have been shaped, and the second mirror (42) deflects beams reflected by targets in the object space, which are incident essentially in parallel to the transmitting beam, to the receiving device (E), if necessary with an interposed light guide (44), preferably after the beams have been shaped, in an axial direction with reference to the hollow shaft (33, 34).

3. System for recording an object space according to claim 1 or 2, **characterised in that** the bearing block (21, 22, 24) is mounted on a turntable (45), which can be swivelled around an axis running normally to the axis of rotation (27) of the measuring head (8) and can be driven by a motor,
and that preferably the turntable (45) is fastened to a preferably cylindrical carrier pipe (10), in which the swivel axis of the turntable (45) is aligned parallel to the axis of the carrier pipe (10) and is preferably identical with it, in which preferably at least one of the following characteristics is provided:
(a) the outer contour (61) of the measuring head (8) in the rest position, in which the entrance and exit window (29, 52) for the measuring beams is directed towards the turntable (45), is adapted to the contour of the bearing block (21, 22, 24) and together these take the shape of a spherical segment or similar for example (figures 4a and 4b);
(b) the bearing block (21, 22, 24) and the measuring head (8) in the rest position are offset in diameter by steps with reference to the carrier pipe (10), in which a second pipe (59), which can move lengthways, is arranged on the carrier pipe (9 or 10) so that it can be shifted over the areas of the bearing block (21, 22, 24) and the measuring head (8) in the rest position, which are offset in diameter, and essentially seals the turntable (45) and the measuring head (8) when the bearing block (21, 22) is in the pushed forward position (figures 4a and 4b);
(c) the carrier pipe (10) is arranged on a bogie (11) with the bearing block (21, 22, 24) and the measuring head (8), which can be brought to the object to be measured (12) into a defined and reproducible position.

4. System for recording an object space according to one of the previous claims, **characterised in that** the bearing block (21, 22, 24) and/or the carrier pipe (10) has cooling, particularly liquid cooling (48, 57), and/or is provided with heat insulation (49), in which with liquid cooling the cooling liquid for the bearing block and if necessary also for the carrier pipe (10) is supplied and removed through hose pipes (62), which are put inside the carrier pipe (10).

5. System for recording an object space according to one of the previous claims, **characterised in that** the measuring head (8) can be cooled by compressed air, in which the compressed air can be induced into the measuring head (8) through one side (33) of the hollow shaft (33, 34) and can be drawn off from it through the other side (34), in which the compressed air is supplied through a hose pipe inside the carrier pipe (10), whilst the cooling air can be drawn off directly through the carrier pipe (10).

6. System for recording an object space according to one of the previous claims, **characterised in that** it is used for measuring and inspecting containers and tank wagons (1) for corrosive liquids, particularly metal smelt.

7. System for recording an object space according to one of the previous claims, **characterised in that** a mirror (53) is arranged in front of the entrance and exit window for the measuring beams, which deflects the measuring beams in an essentially tangential direction with reference to the measuring head (8) (figure 3).

## Revendications

1. Dispositif de prise de vues d'un espace objet avec un élément de mesure opto-électronique de l'éloignement, selon un procédé faisant intervenir le temps de parcours du signal, avec un dispositif émetteur (S) pour émettre des signaux optiques, en particulier des signaux lasers, et un dispositif récepteur (E) pour recevoir des signaux optiques, en particulier d'un rayonnement laser ; qui sont réfléchis par des objets se trouvant dans l'espace cible ; en outre avec un dispositif de balayage pour dévier les axes optiques du dispositif émetteur et récepteur (S, respectivement E) en, de préférence deux directions orthogonales, sachant que les axes optiques du dispositif émetteur et récepteur (S, respectivement E) s'étendent sensiblement parallèlement, en outre avec un dispositif d'évaluation qui, à partir du temps de parcours ou de la position de phase du signal optique émis, détermine des valeurs d'éloignement, sachant que les coordonnées dans l'espace des différents éléments de données résultent des valeurs d'éloignement et de la déviation de rayon issue du dispositif de balayage, **caractérisé par** une tête de mesure (8) rotative, montée en palier au moyen d'un arbre creux (33, 34) d'un bloc palier (21, 22, 24), et par un dispositif à miroirs (41, 42), disposé de façon rigide par rapport à la tête de mesure (8), dispositif à miroirs au moyen duquel des rayons, incidents axialement par rapport à l'arbre creux (33, 34), sont susceptibles d'être déviés en direction radiale et vice versa, sachant que le rayonnement du dispositif émetteur (S) disposé de façon localement fixe peut être introduit de façon guidée en direction axiale, par rapport à l'arbre creux (33, 34), et peut être émis en direction radiale au moyen du dispositif à miroirs (41, 42), et le rayonnement, réfléchi par des cibles situées dans l'espace objet, est susceptible d'être dévié dans la direction de l'axe de l'arbre creux (33, 34) par le dispositif à miroirs (41, 42), et est susceptible d'être amené au dispositif récepteur (44) qui est également disposé de façon localement fixe.

2. Dispositif de prise de vues d'un espace objet selon la revendication 1, **caractérisé par** une tête de mesure (8) rotative, entraînée par un moteur (M), tête disposée entre les deux branches (21, respectivement 22) de la tête de palier (21, 22, 24) et montée en palier sur un arbre creux (33, 34), sachant que deux miroirs (41, 42) sont fixés axialement en référence à l'arbre creux (33, 34) dans la tête de mesure (8), et qu'un premier miroir (41) dévie les rayons, pénétrant axialement à travers l'arbre creux (33, 34), venant du dispositif émetteur (S) ou d'un conducteur de lumière (39), le cas échéant interposé, la déviation se faisant en direction radiale par rapport à l'axe de l'arbre creux (33, 34) et les envoie, après avoir subi un formage de rayon prévu de préférence, et le deuxième miroir (42) dévie des rayons, incidents sensiblement parallèlement au rayon d'émission, réfléchis par des cibles situées dans l'espace objet, de préférence après leur avoir fait subir un reformage de rayons, la déviation se faisant dans la direction axiale, par rapport à l'arbre creux (33, 34), sur le dispositif de réception (E), le cas échéant avec interposition d'un guide de lumière (44).

3. Dispositif de prise de vues d'un espace objet selon la revendication 1 ou 2, **caractérisé en ce que** le bloc palier (21, 22, 24) est monté sur un plateau rotatif (44) susceptible de pivoter autour d'un axe, s'étendant perpendiculairement à l'axe de rotation (27) de la tête de mesure (8) et susceptible d'être entraîné par un moteur,
et **en ce que**, de préférence, le plateau rotatif (45) est fixé sur un tube support (10), de préférence cylindrique, l'axe de pivotement du plateau rotatif (45) étant orienté parallèlement à l'axe du tube support (10), de préférence étant identique à celui-ci, où
de préférence au moins l'une des caractéristiques suivantes est prévue :
(a) le contour extérieur (61) de la tête de mesure (8) se trouvant en position de repos, dans laquelle la fenêtre d'entrée et de sortie (29, 52) des rayons de mesure est orientée par rapport au plateau rotatif (45), est adapté au contour du bloc palier (21, 22, 24) et ceux-ci forment conjointement par exemple la forme d'une calotte sphérique ou analogue (Fig. 4a et 4b) ;
(b) le bloc palier (21, 22, 24) et la tête de mesure (8) se trouvant en position de repos sont d'un diamètre diminué par échelons par rapport au tube support (10), sachant qu'un deuxième tube (59) est disposé de façon déplaçable longitudinalement sur le tube support (9, respectivement 10), et est susceptible de coulisser sur les zones à diamètre en retrait, du bloc palier (21, 22, 24) et de la tête de mesure (8) se trouvant à la position de repos, et à l'état avancé, ferme de façon pratiquement étanche le bloc palier (21, 22), le plateau rotatif (45) et la tête de mesure (8) (Fig. 4a et 4b) ;
(c) le tube support (10) est disposé, avec le bloc palier (21, 22, 24) et la tête de mesure (8), sur un chariot (11) susceptible d'être placé en une position définie et reproductible par rapport à l'objet à mesurer (1).

4. Dispositif de prise de vues d'un espace objet selon l'une des revendications précédentes, **caractérisé en ce que** le bloc palier (21, 22, 24) et/ou le tube support (10) présentent un refroidissement, en particulier un refroidissement par liquide (48, 57) et/ou est/sont muni(s) d'une isolation thermique (49) sachant que dans le cas de refroidissement par liquide, l'amenée et l'évacuation du liquide de refroidissement pour le bloc palier et, le cas échéant également, pour le tube support (10), s'effectuent par des conduites en tuyaux souples (62), guidées à l'intérieur du tube support (10).

5. Dispositif de prise de vues d'un espace objet selon l'une des revendications précédentes, **caractérisé en ce que** la tête de mesure (8) est susceptible d'être refroidie par utilisation d'air comprimé, l'air comprimé étant susceptible d'être introduit dans la tête de mesure (8) par un premier côté (33) de l'arbre creux (33, 34) et d'être évacué de celle-ci, par l'autre côté (34), sachant que l'amenée de l'air comprimé s'effectue par une conduite à tuyaux souples à l'intérieur du tube support (10), tandis que l'air de refroidissement est susceptible d'être évacué directement par le tube support (10).

6. Dispositif de prise de vues d'un espace objet selon l'une des revendications précédentes, **caractérisé en ce qu'**il est utilisé pour la mesure et l'inspection de récipients et de camions ou wagons-citernes (1) pour des liquides agressifs, en particulier de masses de métal fondu.

7. Dispositif d'enregistrement d'un espace objet selon l'une des revendications précédentes, **caractérisé en ce que**, avant la fenêtre d'entrée et de sortie des rayons laser, est respectivement disposé un miroir (53) qui dévie en une direction sensiblement tangentielle les rayons de mesure par rapport à la tête de mesure (8) (Fig. 3).
